# EUROPÄISCHE PATENTANMELDUNG

(11) **EP 1 843 611 A2**
(43) Veröffentlichungstag der Anmeldung: **10.10.2007**
(21) Anmeldenummer: 07111144.7
(22) Anmeldetag: 26.03.1999
(51) Int. Cl.: H04Q 7/32

(54) **Chipkarte mit integriertem Standortbestimmungssystem**

(62) Teilanmeldung aus: 03003367.4
(71) Anmelder: Swisscom Mobile AG, 3050 Bern (CH)
(72) Erfinder: Ritter, Rudolf, 3052, Zollikofen (CH)
(74) Vertreter: P&TS Patents & Technology Surveys SA

(57) **Zusammenfassung**

Es ist eine Chipkarte (2) mit mindestens einen Prozessor (21, 23) offenbart. Der Prozessor (21, 23) ermöglicht die Speicherung von Daten, die mindestens Teilnehmeridentifikationsdaten enthalten. Die Erfindung ist dadurch gekennzeichnet, dass die Chipkarte (2) einen Empfänger für Signale, die von einer Konstellation von Satelliten in einem Standortbestimmungssystem ausgesendet werden, enthält.

## Beschreibung

Die vorliegende Erfindung betrifft eine Chipkarte mit einem integrierten Standortbestimmungssystem.

### Stand der Technik

In Telekommunikationsnetzwerken, zum Beispiel in Telekommunikationsnetzwerken nach dem GSM-Standard, hängt die zu verrechnende Verbindungsgebühr von verschiedenen Parametern ab, unter anderem von der Dauer der Verbindung, von der Tageszeit und vom geographischen Standort des anrufenden und des angerufenen Benutzers. Diese Parameter werden meistens in der Infrastruktur des Netzes, zum Beispiel in einer Billingszentrale, ermittelt. Aus diesen Parametern wird dann die Verbindungsgebühr ermittelt und dem Konto des Benutzers beim Netzbetreiber oder bei einem Finanzinstitut belastet. Dieses Verrechnungsverfahren ist extrem aufwendig und teuer für den Netzbetreiber und verlangt ein komplexes Verrechnungssystem und viele manuelle oder halbautomatische Operationen.

Das Patentdokument EP656733 beschreibt ein Verrechnungssystem für Mobilgeräte, in welchem alle Verbindungsparameter, die zur Ermittlung der verrechneten Gebühr nötig sind, im Speicher des Mobilgeräts gespeichert sind. Dieser Betrag kann dann auf der Anzeige des Mobilgeräts zur Information angezeigt werden. Es ist jedoch in diesem Dokument nicht beschrieben, wie die ermittelte Gebühr automatisch verrechnet werden kann. Ausserdem werden die Verbindungsdauer und die Verbindungszeit mit Hilfe der internen Uhr des Mobilgeräts ermittelt. Der Netzbetreiber hat keinen Einfluss auf die Genauigkeit der Uhr in von anderen Herstellern angebotenen Mobilgeräten. Diese Uhr kann in den meisten Mobilgeräten von den Benutzern eingestellt werden, so dass ein Missbrauch durch Einstellung der Uhr auf eine günstigere Tarifperiode leicht möglich ist.

Das Patentdokument FR2680261 beschreibt eine Telefon-Chipkarte, die ein Prepaid-Konto sowie Tarif tabellen enthält. Die verrechneten Gebühren für die Verbindungen werden aus dem Prepaid-Konto in Abhängigkeit von der Verbindungsdauer und der gespeicherten Tarife ermittelt. Die Zeit und die Dauer der Verbindungen werden ebenfalls in einer externen Vorrichtung ermittelt.

Die Patentanmeldung PCT/CH97/00472 beschreibt ein Verrechnungsverfahren, um einem mit einer Identifizierungskarte identifizierten Teilnehmer in einem Telekommunikationsnetz einen Anruf zu verrechnen. In diesem Verrechnungsverfahren wird die Dauer des Anrufs durch einen in der Identifizierungskarte integrierten Quarzoszillator gemessen. Der verrechnete Betrag wird dann in Abhängigkeit von der ermittelten Anrufdauer und von mindestens einer in der Identifizierungskarte gespeicherten Tariftabelle ausgewertet.

Dadurch können die wichtigsten für die Auswertung des verrechneten Betrags benötigten Parameter direkt auf der Karte ermittelt werden, so dass die Verrechnung direkt an der Quelle beim Teilnehmer erfolgen kann. Der ermittelte Betrag kann dann entweder direkt auf einem Prepaid-Konto auf der Identifizierungskarte abgebucht werden und/oder in einem Billingbeleg verpackt und an einen Belastungsserver im Telekommunikationsnetz übermittelt werden.

Chipkarten mit einem integrierten Quarzoszillator sind jedoch schwierig herzustellen und haben eine kurze Lebensdauer, so dass sie auch teuer sind. Ausserdem erlauben die in dieser Anmeldung beschriebenen Chipkarten nur die Ermittlung der Gesprächszeit und -dauer, jedoch nicht des Standorts der anrufenden Teilnehmer.

WO97/40616 beschreibt eine andere SIM-Karte mit einem Prepaid-Konto sowie einer Uhr zur Ermittlung der Dauer eines Anrufs. In einer Variante kann das Prepaid-Konto auch mit Impulsen aus dem Netz abgebucht werden. Die Uhr wird von einer Stromquelle ausserhalb der Chipkarte gespeist; die Zeit kann somit verfälscht werden, indem die Chipkarte vorübergehend nicht gespeist wird.

Die Patentanmeldung CH98/00367 beschreibt eine Identifizierungskarte für Benutzer eines Mobilfunktelefons, in welcher alle Komponenten einer Zeitmessvorrichtung, ausser dem Quarz, enthalten sind. Die integrierte Zeitmessvorrichtung wird mit einem externen Taktsignal, zum Beispiel aus einem Quarz im Mobilgerät, synchronisiert. Ausserdem kann die eingestellte Zeit zu jeder Zeit von einem Zeitserver im Netz geprüft, und falls notwendig, korrigiert werden. Verschiedene Mechanismen erlauben es auf diese Weise, die Genauigkeit und den Gang der Zeitmessvorrichtung aus dem Zeitserver im Netz zu überprüfen.

Mit diesem Verfahren kann nicht verhindert werden, dass die Zeit zwischen zwei Korrekturen vom Benutzer verfälscht wird. Die in dieser Anmeldung beschriebene Chipkarte erlaubt es ausserdem auch nur, die Gesprächszeit und -dauer, jedoch nicht den Standort der Teilnehmer zu ermitteln.

### Zusammenfassung der Erfindung

Es ist folglich ein Ziel der Erfindung, eine Chipkarte mit einer verbesserten integrierten Zeitmessvorrichtung vorzuschlagen.

Ein anderes Ziel ist es, eine neue Chipkarte mit einer integrierten Zeitmessvorrichtung vorzuschlagen, die für gesicherte Anwendungen, in welchen eine unverfälschbare Zeitermittlung benötigt wird, eingesetzt werden kann.

Erfindungsgemäss werden diese Ziele mit Hilfe einer im unabhängigem Vorrichtungsanspruch beschriebenen Vorrichtung und mit einem in den unabhängigen Verfahrensansprüchen beschriebenen Verfahren erreicht, wobei verschiedene Varianten in den abhängigen Ansprüchen beschrieben werden.

Insbesondere werden diese Ziele mit Hilfe eines Verfahrens erreicht, in welchem die Dauer der Verbindungen, oder die Dauer von anderen verrechneten Prozessen, mit einer Zeitangabe ermittelt wird, die mit einem GPS-Empfänger ermittelt wird. Der GPS-Empfänger besteht beispielsweise aus einer Antenne, einer Hochfrequenzschaltung und einer digitalen Bearbeitungsschaltung, wobei alle oder nur gewisse von diesen Komponenten in der Chipkarte integriert werden.

Dadurch können alle für die Auswertung des verrechneten Betrags benötigten Parameter direkt in der Chipkarte ermittelt werden, so dass die Verrechnung direkt an der Quelle beim Teilnehmer erfolgen kann. GPS-Signale sind sehr schwer zu fälschen, so dass das System eine hohe Sicherheit gewährleisten kann.

### Kurze Beschreibung der Figuren

Die vorliegende Erfindung wird mit Hilfe der Beschreibung besser verständlich, welche als Beispiel angeführt ist und durch die Figuren dargestellt wird, wobei:
- Fig. 1: ein Blockschema mit einer Identifizierungskarte in einer ersten Ausführungsform der Erfindung und einem konventionellen Endgerät zeigt.
- Fig. 2: ein Blockschema mit einer Identifizierungskarte in einer zweiten Ausführungsform der Erfindung und einem konventionellen Endgerät zeigt.
- Fig. 3: ein Blockschema mit einer Identifizierungskarte in einer dritten Ausführungsform der Erfindung und einem Endgerät zeigt.
- Fig. 4: ein Blockschema mit einer Identifizierungskarte in einer vierten Ausführungsform der Erfindung und einem Endgerät zeigt.
- Fig. 5: ein Blockschema mit einer Identifizierungskarte in einer fünften Ausführungsform der Erfindung und einem Endgerät zeigt.
- Fig. 6: ein Blockschema mit einer Identifizierungskarte in einer sechsten Ausführungsform der Erfindung und einem konventionellen Endgerät zeigt.
- Fig. 7: ein Blockschema mit einer Identifizierungskarte in einer siebten Ausführungsform der Erfindung, einem konventionellen Endgerät und einer zusätzlichen Vorrichtung zeigt.

### Wege zur Ausführung der Erfindung

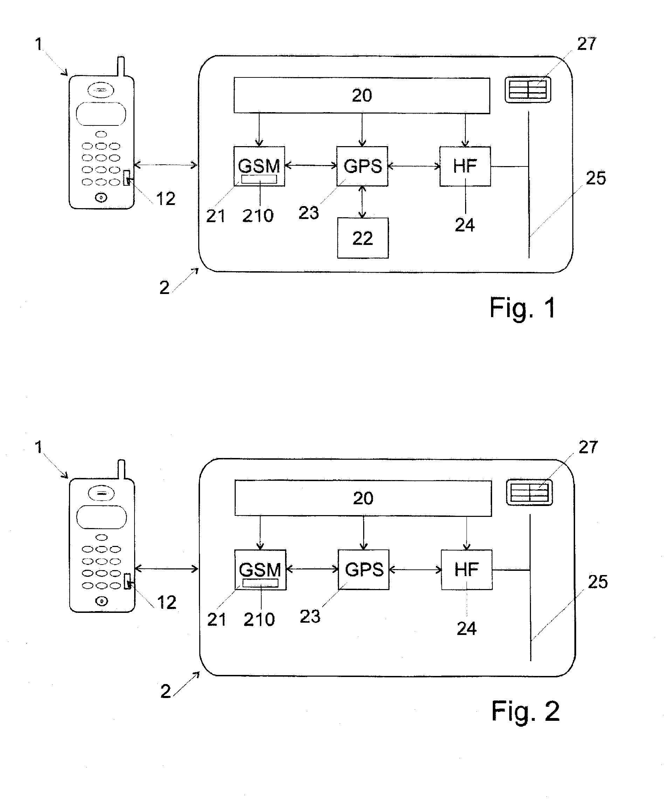

Die Figur 1 zeigt ein Blockschema eines Systems mit einem Endgerät 1 und einer Identifizierungskarte 2. Das Endgerät 1 kann beispielsweise ein digitales Mobilfunktelefon sein, zum Beispiel ein GSM oder ein UMTS-Mobilfunktelefon, oder ein Palmtop oder Laptop mit einer Kommunikationschnittstelle und einem Chipkartenleser. Das Endgerät 1 könnte aber auch ein Telekommunikationsendgerät sein, beispielsweise ein Telefon oder ein Computer, das mit einem Festnetz, beispielsweise einem öffentlichen Telefonnetz oder einem PLC-Netz (Power Line Communication) verbunden ist, in welchem die Teilnehmer mit einer persönlichen Chipkarte identifiziert werden.

Die Identifizierungskarte 2, zum Beispiel eine SIM-Karte 2 (Subscriber Identity Module), kann mit dem Endgerät verbunden sein, um den Teilnehmer in einem Telekommunikationsnetz zu identifizieren. Konventionelle SIM-Karten werden jetzt schon unter anderem in GSM-, und UMTS-Mobilgeräten eingesetzt. Die SIM-Karte ist vorzugsweise eine Full-Size-Karte (ISO); sie wird durch ein Kontaktgebiet 27 auf der Oberfläche der Karte mit dem Endgerät 1 verbunden. Andere Kartenformate und kontaktlose Karten können aber auch im Rahmen dieser Erfindung angewendet werden. Die SIM-Karte 2 enthält Datenverarbeitungsmittel 21, zum Beispiel einen bekannten GSM-SIM-Mikrokontroller. SIM-Karten sind zum Beispiel in der technischen Spezifikation GSM 11.11 und GSM 11.14 beschrieben, die seit 1995 bzw. 1996 beim Sekretariat des European Telecommunications Standards Institute, F-06921 Sophia Antipolis, erhältlich ist. Andere Identifizierungskarten, zum Beispiel Mehrzweckkarten, die unter dem Begriff Opencard bekannt sind, oder Java-Karten, können auch in dieser Erfindung eingesetzt werden.

Erfindungsgemäss enthält die SIM-Karte 2 zusätzlich einen Empfänger für Signale, die von einer Konstellation von Satelliten in einem Standort-Bestimmungssystem, beispielsweise einem GPS-System, ausgesendet werden. Der Empfänger umfasst eine Radiofrequenz-Front End Schaltung 24, einen integrierten digitalen Prozessor 23 und eine integrierte GPS-Antenne. Sowohl der digitale Prozessor 23 als auch die Front-End Schaltung 24 sind jeweils in einem Chip integriert. Die Schaltungen 23 und 24 werden beide vorzugsweise durch einen in der Karte 2 enthaltenen Energiespeicher 20 (Akkumulator oder Kondensator zum Beispiel) gespeist, zumindest wenn das Endgerät 1 ausgeschaltet ist. Die Speisespannung beträgt vorzugsweise 3,3 Volts oder weniger, damit der Stromverbrauch begrenzt bleibt.

Die Front End Schaltung 24 besteht vorzugsweise aus einem ASIC, das das GPS Signal mit einer Frequenz von ca. 1,575 GHz in ein Signal mit einer niedrigeren Frequenz umwandelt, das vom digitalen Prozessor 23 bearbeitet werden kann. Die Schaltung 24 wird vorzugsweise mit bipolaren Transistoren realisiert, oder mit einer anderen schnellen Technologie. Die Front-End Schaltung kann eventuell auch einen Verstärker für das Signal aus der Antenne 25 umfassen.

Die digitale Schaltung 23 umfasst beispielsweise einen universellen Prozessor, oder vorzugsweise einen Signalprozessor (DSP), der beispielsweise mit CMOS oder mit einer anderen stromsparenden Technologie realisiert werden kann, sowie ein ROM, ein RAM und eventuell einige Korrelatoren. Mit einem an sich bekannten Programm im ROM kann der Prozessor in der Schaltung 23 die Signale aus der Schaltung 24 bearbeiten und aus diesen Signalen eine Zeitinformation und eventuell eine Standortinformation ermitteln.

Ein Oszillator 22, beispielsweise ein Quarzoszillator, ein LC-Oszillator oder ein Oszillator, der eine elektrische Frequenz aus einer Interferenz zwischen zwei optischen Frequenzen eines Lasers erzeugen kann, ist in dieser Variante auch in der Karte 2 integriert. Die vom Oszillator 22 erzeugte Frequenz wird unter anderem verwendet, um die GPS-Frequenzen zu scannen.

Die Antenne 25 ist in dieser Ausführungsform ebenfalls in der Chipkarte 2 integriert. In dieser Variante enthält die Karte sämtliche Komponenten eines GPS-Empfängers und kann die Zeit und den Standort auch ermitteln, wenn sie nicht mit dem Mobilgerät verbunden ist. Da alle Komponenten des GPS-Empfängers in der Karte 2 integriert sind, ist es ausserdem sehr schwer, für einen Fälscher die eingestellte Zeit oder den Standort zu fälschen.

Die digitale Schaltung 23 ist mit einem konventionellen GSM-Prozessor 21 verbunden. Die vom GPS-Empfänger ermittelte Zeit- und Standortinformation wird dem GSM-Prozessor 21 abgegeben. Mit dieser Zeitinformation kann der Prozessor 21 die absolute Zeit und die Dauer bestimmter Prozesse in der Karte 2, beispielsweise die Dauer einer telefonischen Verbindung, ermitteln. Der GSM-Prozessor 21 umfasst ausserdem vorzugsweise Tariftabellen, mit welchen er die Telekommunikationsgebühren in Abhängigkeit der Zeit, der Dauer der Verbindung und/oder des Standorts des Teilnehmers ermitteln kann. Diese Tariftabellen werden vorzugsweise aus einem vom Netzbetreiber verwalteten Tarifserver im Netz mittels kryptographisch signierter und verschlüsselter SMS- oder USSD Meldungen ferngeladen, und werden in einem gesicherten Bereich 210 des Prozessors 21 gespeichert, so dass sie vom Benutzer nicht geändert werden können. Der Prozessor prüft, ob die empfangenen Tarif tabellen tatsächlich von einem autorisierten Netzbetreiber signiert worden sind. Die Schweizer Patentanmeldung Nr. 367/98 beschreibt andere Prozesse, um die Zeit beim Einloggen der SIM-Karte im Kommunikationsnetz einzustellen.

Auf diese Weise kann der ermittelte Betrag sofort auf der Anzeige des Mobilgeräts 21 angezeigt werden und von einem Prepaid-Konto einer vorbezahlten SIM-Karte abgebucht werden, oder in einem signierten Beleg verpackt werden und an ein Finanzdienstleistungsunternehmen (Bank oder Netzoperator) übermittelt werden. Die erfindungsgemässe Karte kann aber auch eingesetzt werden, um die Dauer von anderen Prozessen in der Karte 2 zu messen, beispielsweise die Benutzungsdauer von bestimmten Diensten oder Anwendungen oder die Benutzung von nicht für die Verkehrsabwicklung zuständigen Ressourcen.

Es ist ausserdem möglich, die erfindungsgemässe Chipkarte für andere Anwendungen als die Mobilfunktelefonie einzusetzen. Solche Chipkarten können beispielsweise auch in Pay-TV-Systemen oder in vernetzten Computern benutzt werden, beispielsweise um eine benutzungszeitabhängige Rechnung, die von der Benutzungszeit, von der Benutzungsdauer und/oder vom Standort des Benutzers abhängt, zu erstellen. Die Chipkarte 2 kann auch als Identifizierungskarte in einem Festnetz oder in einem PLC (Power Line Communication) Netz angewendet werden, in welchen die Teilnehmer mit persönlichen Chipkarten identifiziert werden.

Der Prozessor 21 kann im Rahmen dieser Erfindung auch ein an sich bekannter Java-Prozessor sein, der beispielsweise auch WAP-Modulen (Wireless Application Protocol) enthalten kann, um die Karte 2 mit dem Internet zu verbinden. Es ist auch im Rahmen dieser Erfindung möglich, zum Beispiel den GSM-Prozessor 21 und die digitale Schaltung 23 in einem einzigen Chip zu integrieren.

Vorzugsweise benutzt die GPS-Schaltung die vom Mobilgerät und vom Mobilfunknetz erhaltene Zeit- und Standortinformation, um sich schneller und auch in schwierigen Empfangsbedingungen mit dem empfangenen GPS-Signal zu synchronisieren.

In einer Variante benutzt die SIM-Karte 2 die Zeit- und Standortinformation vom Mobilgerät und/oder vom Mobilfunknetz, beispielsweise von der Basisstation, wenn sie kein GPS-Signal empfangen kann, zum Beispiel im Inneren von Gebäuden. In diesem Fall wird die Zeit erst dann automatisch eingestellt, wenn die Karte eine neue Zeitinformation aus einem GPS-Satellit empfangen kann. Die Benutzung der Karte kann mit einer speziellen Anwendung automatisch gesperrt werden, wenn die Karte innerhalb einer bestimmten Zeit nicht eingestellt wurde.

Die Figur 2 zeigt ein Blockschema einer Identifizierungskarte 2 in einer zweiten Ausführungsform der Erfindung. In dieser Variante enthält die Karte 2 keinen eigenen Oszillator für das Scanning des GPS-Frequenzen, sondern benutzt zu diesem Zweck den Quarzoszillator 12, der sowieso in den meisten Mobilgeräten 1 enthalten ist. In dieser Variante kann die Karte nicht funktionieren, wenn sie nicht mit einem Mobilgerät verbunden ist. Die ermittelte Zeit kann jedoch nicht mit einer einfachen Manipulation des Mobilgeräts oder einem Ersatz des Quarzes 12 verfälscht werden, so dass diese Ausführungsform die gleiche Sicherheit wie die erste aufgeführte Ausführungsform gewährleistet.

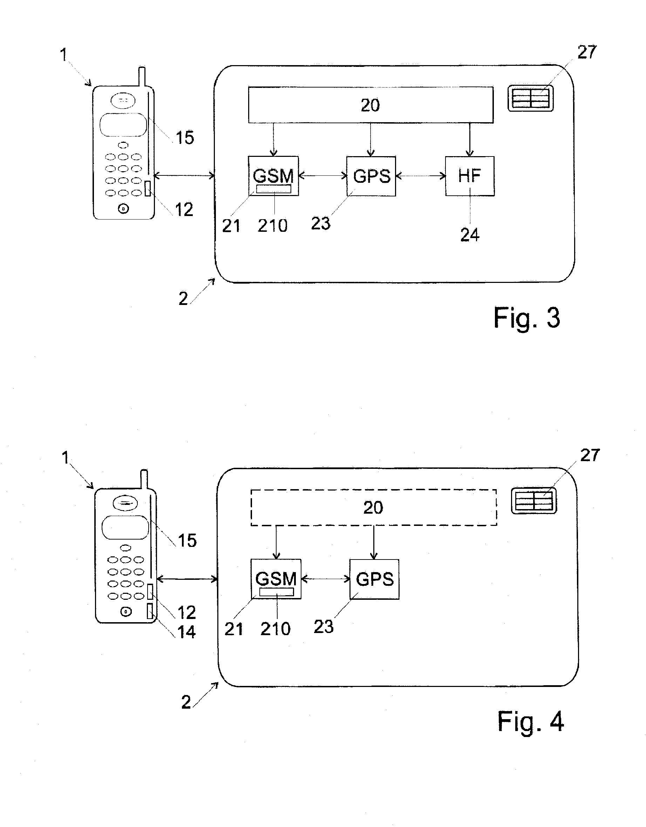

Die Figur 3 zeigt ein Blockschema einer Identifizierungskarte 2 in einer dritten Ausführungsform der Erfindung. In dieser Variante benutzt die Karte auch den Quarzoszillator 12 des Mobilgeräts. Ausserdem enthält sie keine GPS-Antenne, sondern benutzt eine im Mobilgerät 1 integrierte Antenne, wobei das empfangene Signal über das Kontakgebiet 27 an die RF-Schaltung 24 übermittelt wird. Diese Variante erlaubt es, eine bessere, grössere Antenne zu verwenden, und ausserdem die Antenne ausserhalb der Gehäuse des Mobilgeräts oder im Gehäuse der einsteckbaren Batterie zu montieren, so dass das Problem der Dämpfung des GPS-Signales im Inneren der Gehäuse gelöst wird. Allerdings kann diese Variante nur mit Mobilgeräten funktionieren, die über eine GPS-Antenne verfügen.

Die Figur 4 zeigt ein Blockschema einer Identifizierungskarte 2 in einer vierten Ausführungsform der Erfindung. In dieser Variante benutzt die Karte auch den Quarzoszillator 12 und die GPS-Antenne 15 des Mobilgeräts 1. Ausserdem benutzt sie eine Radiofrequenz-Schaltung 14, die auch im Mobilgerät 1 vorhanden ist. Die Signale zwischen der Schaltung 14 und der digitalen Schaltung 23 werden auch über das Kontaktgebiet 27 übermittelt. Da die GPS-Signale kodiert werden, ist es sehr schwierig, falsche Signale zu erzeugen, so dass diese Variante auch eine hohe Sicherheit bietet.

Da die Karte nur noch die stromsparenden Komponenten 21 und 22 umfasst, ist es auch möglich, auf die Batterie 20 zu verzichten und nur die Batterie vom Mobilgerät zu verwenden.

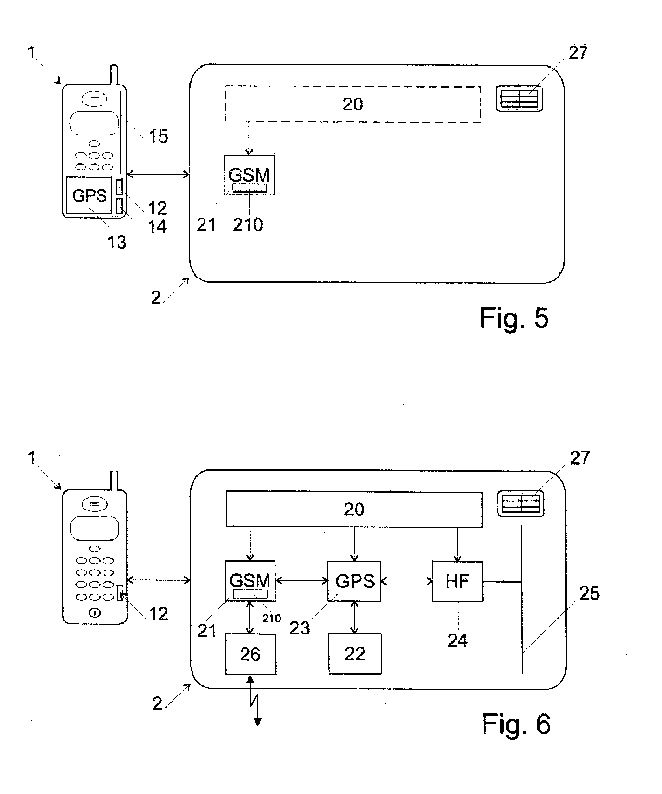

Die Figur 5 zeigt ein Blockschema einer Identifizierungskarte 2 in einer fünften Ausführungsform der Erfindung. In dieser Variante benutzt die Karte auch den Quarzoszillator 12, die GPS-Antenne 15 und die Radiofrequenzschaltung 14 des Mobilgeräts 1. Ausserdem benutzt sie mindestens gewisse Funktionen einer im Mobilgerät 1 integrierten GPS-digitalen-Schaltung, so dass die Karte nur einige sicherheitskritische GPS-Operationen durchführt. Diese Operationen können beispielsweise auch vom GSM-Prozessor 21 durchgeführt werden. In dieser Variante erhält die Karte 2 digitale und vorzugsweise elektronisch signierte und verschlüsselte Signale aus der Schaltung 13, die in einer schwer zu generierenden Form sind, und ermittelt aus diesen Signalen die Zeit- und/oder die Standortinformation.

Diese Variante bietet den Vorteil, dass sie keine Hardwareanpassungen benötigt. Sie kann beispielsweise mit einer konventionellen SIM-Karte, beispielsweise mit einer JAVA-Karte oder mit einer OpenCard-Karte, eingesetzt werden, die mit einer neuen Anwendung programmiert worden ist, mit welcher die Karte auf bestimmte Signale der Schaltung 14 zugreifen kann.

Die Figur 6 zeigt ein Blockschema einer Identifizierungskarte 2 in einer sechsten Ausführungsform der Erfindung. Diese Variante entspricht der Ausführungsform der Figur 1, ausser dass die Karte mit einer zusätzlichen kontaktlosen Schnittstelle 26 versehen ist, zum Beispiel einer elektromagnetischen Schnittstelle, wie beispielsweise in der Anmeldung PCT/CH97/00237 beschrieben, oder einer hochfrequenten Schnittstelle, zum Beispiel einer sogenannten "Bluetooth-Schnittstelle". Mit dieser Schnittstelle kann die SIM-Karte kontaktlos mit externen Geräten kommunizieren, beispielsweise um Prozesse von externen Geräten zu verrechnen.

Eine kontaktlose Schnittstelle 26 kann auch in Chipkarten gemäss einer der anderen Ausführungsformen der Figuren 2 bis 5 vorgesehen werden.

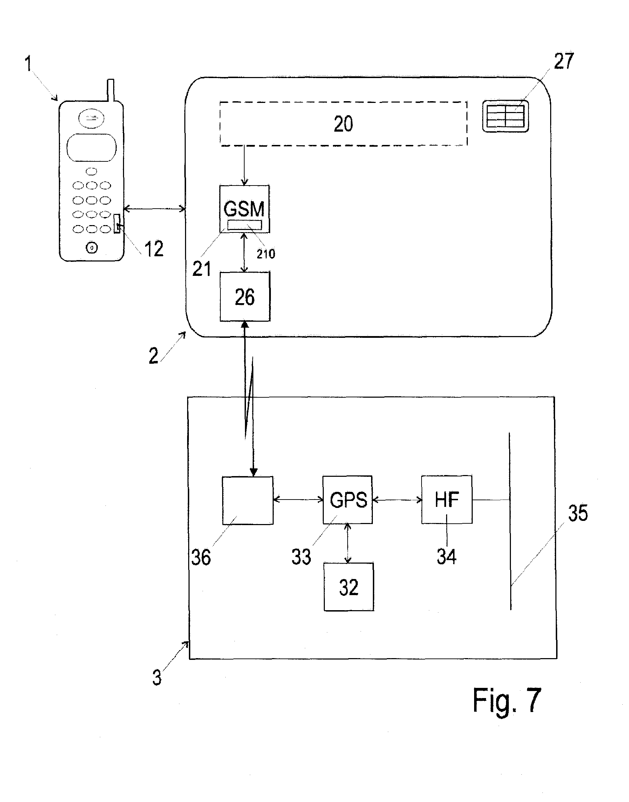

Die Figur 7 zeigt ein Blockschema eines Systems mit einer Identifizierungskarte 2 in einer siebten Ausführungsform der Erfindung. In dieser Variante umfasst die Karte einen konventionellen Prozessor 21, beispielsweise einen GSM-Prozessor oder einen mehrzweck JAVA-Prozessor, sowie eine kontaktlose Schnittstelle 26, vorzugsweise eine elektromagnetische Schnittstelle, beispielsweise eine Bluetooth- Schnittstelle. Die SIM-Karte kann sich über diese kontaktlose Schnittstelle mit einer externen Vorrichtung 3 verbinden, die über einen GPS-Empfänger verfügt. Im dargestellten Beispiel umfasst die externe Vorrichtung 3 eine kontaktlose Schnittstelle 36, beispielsweise eine RFID-Schnittstelle, die mit einer Frequenz von 135KHz, 13,65MHz, 2,45GHz oder 5,8 GHz arbeitet, oder eine Bluetooth-Schnittstelle, eine GPS-Antenne 35, eine Radiofrequenz Front-End Schaltung 34, eine digitale GPS-Schaltung 33 und einen Oszillator 32. Die externe Vorrichtung 3 verfügt ausserdem vorzugsweise über nicht dargestellte Signierungsmittel, um die mit dem GPS-Empfänger erhaltene Zeit- und Standortinformation zu signieren, in Belegen zu verpacken und um diese Belege über die Schnittstelle 36-26 an die Chipkarte 2 weiterzuleiten.

Die Chipkarte 2 kann dann diese Belege empfangen und prüfen, ob sie von einer vom Netzbetreiber zugelassene Vorrichtung 3 signiert worden sind. In diesem Fall kann die Chipkarte mit Hilfe von Tariftabellen im gesicherten Speicherbereich 210 Prozesse auf Basis der empfangenen Zeit- und/oder Standortinformation verrechnen.

Die externe Vorrichtung kann vorzugsweise über nicht dargestellte Kommunikationsmittel verfügen, mit welchen sie digitale Daten über ein nicht dargestelltes Netz empfangen kann. Beispielsweise kann die Vorrichtung 3 über ein Modem oder über einen Router verfügen, mit welchem sie im Internet kommunizieren kann. Vorzugsweise umfasst die Vorrichtung 3 einen DAB-Empfänger (Digital Audio Broadcasting), mit welchem sie digitale Daten in Broadcast-Modus empfangen kann. Diese Daten können dann auch über die Schnittstelle 26-36 übermittelt werden. Auf diese Weise können beispielsweise aktualisierte Tariftabellen über diesen Weg in die SIM-Karte 2 übertragen werden.

## Patentansprüche

1. Chipkarte (2) mit mindestens einen Prozessor (21, 23), welcher die Speicherung von Daten ermöglicht, die mindestens Teilnehmeridentifikationsdaten enthalten, **dadurch gekennzeichnet, dass** die Chipkarte (2) einen Empfänger für Signale, die von einer Konstellation von Satelliten in einem Standortbestimmungssystem ausgesendet werden, enthält.

2. Chipkarte (2) gemäss Anspruch 1, **dadurch gekennzeichnet, dass** die Chipkarte (2) sämtliche Komponenten eines GPS-Empfängers enthält.

3. Chipkarte (2) gemäss Anspruch 1 oder 2, **dadurch gekennzeichnet, dass** der Empfänger für Signale eine von einem Mobilgerät und/oder von einem Mobilfunknetz erhaltene Zeit und/oder Standortinformation benutzt.

4. Chipkarte (2) gemäss einem der Ansprüche 1 bis 3, **dadurch gekennzeichnet, dass** die Chipkarte (2) eine Zeit und/oder Standortinformation von einem Mobilgerät und/oder Mobilfunknetz benutzt, wenn sie kein Standortsignal empfangen kann.

5. Chipkarte (2) gemäss Anspruch 1 bis 4, **dadurch gekennzeichnet, dass** der benannte Prozessor (21, 23) eine digitale Bearbeitungsschaltung (23) umfasst, mit welcher die benannten Signale dekodiert werden können, sowie einen Prozessor (21), in welchem die benannten Teilnehmeridentifikationsdaten gespeichert sind.

6. Chipkarte (2) gemäss Anspruch 5, **dadurch gekennzeichnet, dass** die benannte digitale Bearbeitungsschaltung (23) in einem Schaltkreis integriert ist.

7. Chipkarte (2) gemäss einem der Ansprüche 5 oder 6, **dadurch gekennzeichnet, dass** sie ausserdem eine integrierte Schaltung (14) enthält, mit welcher Satelliten-Standortbestimmungssignale, die mit einer Antenne (15,25) empfangen werden, in eine Form umgewandelt werden, die von der benannten digitalen Bearbeitungsschaltung (23) bearbeitet werden kann.

8. Chipkarte (2) gemäss einem der Ansprüche 1 bis 7, **dadurch gekennzeichnet, dass** sie ausserdem eine integrierte Antenne (25) umfasst.

9. Chipkarte (2) gemäss einem der Ansprüche 1 bis 8, **dadurch gekennzeichnet, dass** sie ausserdem eine integrierte Batterie (20) zur Speisung der benannten digitalen Bearbeitungsschaltung (23) umfasst.

10. Chipkarte (2) gemäss einem der Ansprüche 1 bis 9, **dadurch gekennzeichnet, dass** sie ausserdem eine kontaktlose Schnittstelle (26) umfasst.

11. Chipkarte (2) gemäss Anspruch 10, **dadurch gekennzeichnet, dass** die benannte kontaktlose Schnittstelle (26) eine elektromagnetische Schnittstelle ist.

12. Chipkarte (2) gemäss Anspruch 11, **dadurch gekennzeichnet, dass** die benannte elektromagnetische Schnittstelle (26) eine Bluetooth-Schnittstelle ist.

13. Chipkarte (2) gemäss einem der Ansprüche 1 bis 12, **dadurch gekennzeichnet, dass** die benannte Identifikationsdaten Identifikationsdaten eines Teilnehmers in einem digitalen Kommunikationsnetz sind.

14. Chipkarte (2) gemäss Anspruch 13, **dadurch gekennzeichnet, dass** die Dauer von Gesprächen im benannten Kommunikationsnetz mit der benannten Zeitinformation ermittelt wird.

15. Chipkarte (2) gemäss einem der Ansprüche 13 oder 14, **dadurch gekennzeichnet, dass** die Dauer der Benutzung von nicht für die Verkehrsabwicklung zuständigen Ressourcen in der Identifizierungskarte (2) mit der benannten Zeitinformation ermittelt wird.

16. Chipkarte (2) gemäss einem der Ansprüche 14 oder 15, **dadurch gekennzeichnet, dass** sie ausserdem mindestens eine Tarif tabelle (210) enthält, in welcher Gebühren für die Benutzung des Kommunikationsnetzes angegeben werden.

17. Chipkarte (2) gemäss Anspruch 16, **dadurch gekennzeichnet, dass** die benannte Tariftabelle (210) aus einem Tarif-Server im benannten Telekommunikationsnetz ferngeladen und/oder verändert werden kann.

18. Chipkarte (2) gemäss Anspruch 17, **dadurch gekennzeichnet, dass** sie ausserdem elektronische Signaturprüfmittel (21) umfasst, um die elektronische Signatur von empfangenen Tarif tabellen zuprüfen.

19. Chipkarte (2) gemäss einem der Ansprüche 14 bis 18, **dadurch gekennzeichnet, dass** sie ausserdem ein Prepaid-Konto umfasst, aus welcher die ermittelten Beträge abgebucht werden.
